# EUROPEAN PATENT APPLICATION

(11) **EP 2 019 552 A2**
(43) Date of publication of application: **28.01.2009**
(21) Application number: 08103216.1
(22) Date of filing: 31.03.2008
(51) Int. Cl.: H04N 7/26, H04N 7/30, H04N 7/50

(54) **Image processing apparatus and method**

(30) Priority: 25.07.2007 KR 20070074597
(71) Applicant: Samsung Electronics Co., Ltd., Suwon-si Gyeonggi-do (KR)
(72) Inventor: Yang, Su-hyun, Sanghyeon-dong, Yongin-si Gyeonggi-do (KR)
(74) Representative: Walaski, Jan Filip

(57) **Abstract**

A broadcast processing apparatus which has a display unit, the broadcast processing apparatus includes: a signal receiver which receives an image signal having an encoded I picture and header information; a parser which extracts the header information from the received image signal; a user selection unit; a file generator; and a controller which controls the file generator to generate a marker code corresponding to a format of a particular image file and generate the image file based on the generated marker code, the header information and the encoded I picture if an image capture command is supplied through the user selection unit to capture the image.

## Description

The invention relates to an image processing apparatus and a method of image processing, and more particularly, to a broadcast processing apparatus which processes a moving picture, and a control method thereof.

In recent years, the advanced digital broadcasting technologies have provided a user with a high quality image signal, compared to analogue broadcasting. In digital broadcasting, video/audio signals are encoded into digital signals according to a predetermined standard, e.g. moving picture expert group (MPEG) standard, to be transmitted to a display apparatus. The display apparatus decodes the supplied video/audio signals according to the standard and displays the signals.

The MPEG standard defines an image signal as an intra I picture, a prediction P picture and a bi-direction B picture. The I picture is decoded with the current picture information only, provides random access points and does not need to compensate for motion. The I picture is similar to a joint photographic experts group (JPEG) file, a still image file, in format and functional aspects. The I picture is decoded through a decoding process which is similar to that of the JPEG file. Meanwhile, P and B picture image signals are non-intra pictures which need to compensate for motion using previous and subsequent picture images.

The digital broadcasting offers various services such as multimedia contents. As the display device has been developed to process the digital broadcast, it is required to edit the broadcast signal in various methods to meet user's demands.

Accordingly, it is an aspect of the present invention to provide a broadcast processing apparatus which captures and plays a moving picture without difficulty, and a control method thereof.

Also, it is another aspect of the present invention to provide a broadcast processing apparatus which decodes a JPEG file without an additional decoder, and a control method thereof.

Additional aspects of the present invention will be set forth in part in the description which follows and, in part, will be obvious from the description, or may be learned by practice of the present invention.

The foregoing and/or other aspects of the present invention are also achieved by providing a broadcast processing apparatus which has a display unit, the broadcast processing apparatus including: a signal receiver which receives an image signal having an encoded I picture and header information; a parser which extracts the header information from the received image signal; a user selection unit; a file generator; and a controller which controls the file generator to generate a marker code corresponding to a format of a particular image file and generate the image file based on the generated marker code, the header information and the encoded I picture if an image capture command is supplied through the user selection unit to capture the image.

The image file may include a joint photographic expert group (JPEG) file.
The broadcast processing apparatus may include a decoder which decodes the image signal, wherein the controller controls the decoder to decode the JPEG file if a play command is supplied through the user selection unit to play the captured image.

The broadcast processing apparatus may include a storage unit, wherein the controller stores the generated JPEG file in the storage unit, and decodes the stored JPEG file if the play command is supplied.

The marker code may include at least one of a start-of-image marker code, an end-of-image marker code, a start-of-frame marker code and a start-of-scan marker code.

The broadcast processing apparatus may include a file transmission interface which transmits the JPEG file stored in the storage unit to the outside.

The file transmission interface may include at least one of a wired/wireless LAN unit, a Bluetooth unit, a wireless communication unit, a USB port and a memory card slot.

The foregoing and/or other aspects of the present invention are also achieved by providing a broadcast processing apparatus, including: a signal receiver which receives an image signal having an I picture and header information; a parser which extracts the header information from the received image signal; a user selection unit which is provided to select an image capture function; a decoder which decodes the image signal; a display unit; and a controller which generates a marker code corresponding to a format of a particular image file, generates the image file based on the generated marker code, the header information and the encoded I picture and controls the decoder to decode the image file to be displayed on the display unit, if an image capture command is supplied through the user selection unit.

The foregoing and/or other aspects of the present invention are also achieved by providing a control method of a broadcast processing apparatus which has a parser to extract header information from an image signal having an encoded I picture, and a decoder to decode the I picture, the control method including: receiving the image signal; receiving a selection signal to select an image capture function; generating a marker code corresponding to a format of a particular image file; and generating the image file based on the marker code, the header information and the encoded I picture.

The image file may include a joint photographic expert group (JPEG) file.
The control method may include storing the generated JPEG file.

The control method may include receiving a play signal to select playing of the captured image, and decoding the JPEG file through the decoder.

The control method may include receiving a play signal to select playing of the captured image, and decoding the JPEG file through the decoder.

Embodiments of the invention will now be described, by way of example, with reference to the drawings, in which:
Figure 1 is a control block diagram of a broadcast processing apparatus according to a first exemplary embodiment of the present invention;
Figure 2 illustrates a marker code of a JPEG file according to the first exemplary embodiment of the present invention;
Figure 3 is a control flowchart to describe a control method of the broadcast processing apparatus according to the first exemplary embodiment of the present invention; and
Figure 4 is a control block diagram of a broadcast processing apparatus according to a second exemplary embodiment of the present invention.

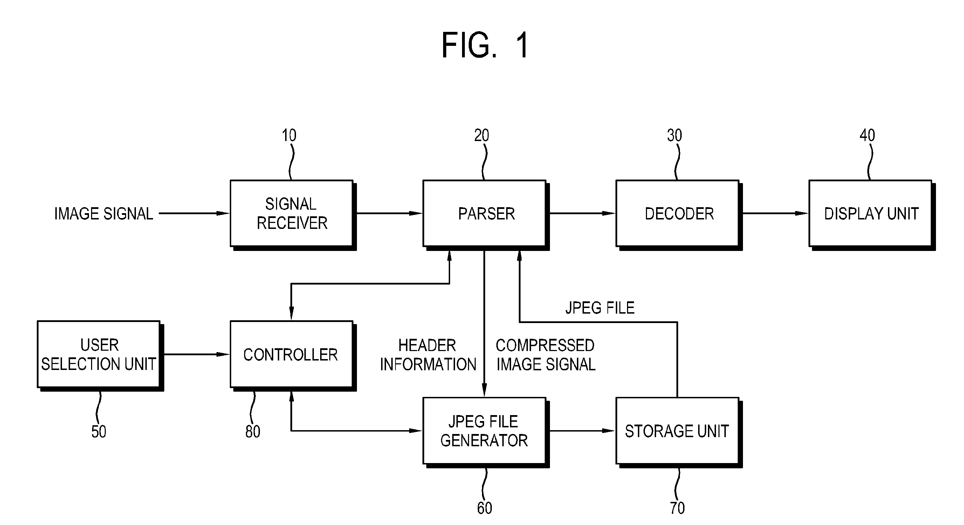

Figure 1 is a control block diagram of a broadcast processing apparatus according to a first exemplary embodiment of the present invention.

As shown therein, a broadcast processing apparatus includes a signal receiver 10, a parser 20, a decoder 30, a display unit 40, a user selection unit 50, a JPEG file generator 60, a storage unit 70 and a controller 80 which controls the foregoing elements.

The signal receiver 10 selects a broadcast channel and receives a broadcast signal corresponding to the concerned channel according to a control signal of the controller 80. The broadcast signal includes an image signal, an audio signal and a data signal. The signal receiver 10 includes an antenna (not shown), a tuner (not shown) which tunes a broadcast signal corresponding to a particular frequency, and a low noise amplifier (not shown) which amplifies a broadcast signal inputted to the tuner.

The broadcast processing apparatus may further include a demodulator, a demultiplexer and a buffer which are not shown. The demodulator demodulates the modulated broadcast signal into an original signal. The demultiplexer divides the demodulated broadcast signal into an audio signal, an image signal and a data signal. The data signals exclude the image signal and the audio signal of the broadcast signal, and may include program data. The buffer stores the image signal as much data as the decoder 30 processes. The buffer may have a single configuration to store both the image signal and the audio signal, or a configuration to store the image signal and the audio signal separately.

The parser 20 parses the inputted image signal and extracts header information therefrom to decode the image signal. The parser 20 transmits the substantially-compressed image signal alone, to the decoder 30. The parser 20 may further include a storage unit to buffer the image signal until receiving an image signal corresponding to a single frame. The header information is extracted by the parser 20, and includes a picture size such as the number of lines of an image and the number of pixels in a line, frame rate, bit rate, chroma format, quantization information, picture coding types, etc. The quantization information and the picture coding types include a quantization table number, a quantization matrix, entropy table selection information, an entropy coding table, etc. which are required to decode the image signal. The image signal which is transmitted to the parser 20 remains encoded.

The MPEG standard defines an image signal as an intra I picture, a prediction P picture and a bi-direction B picture. The I picture is decoded with the current picture information only, provides random access points and does not compensate for motion. The I picture is similar to a JPEG file, a still image file, in format and functional aspects. The I picture is decoded through a decoding process which is similar to that of the JPEG file.

The decoder 30 decodes the inputted image signal to be displayed on the display unit 40. The decoder 30 may include a variable length decoder (not shown) which decodes the image signal encoded in a variable length into an original size, an inverse scanner (not shown) which transforms image data in two-dimensional frequency domain into image data in two-dimensional space domain, an inverse quantizer (not shown) which inverse-quantizes an image block supplied from the inverse scanner by using a default quantization matrix, an inverse discrete cosine transformer (not shown) which transforms data in the frequency domain into data in the space domain with respect to remaining domains based on DC components obtained from the inverse quantizer, and a motion compensator (not shown) which compensates for motion of the image data. The configuration and role of the decoder 30 are known according to the MPEG standard.

The display unit 40 displays the supplied broadcast signal and a captured image thereon. The display unit 40 may include a liquid crystal display (LCD) panel, an organic light emitting diode (OLED) panel and a plasma display panel (PDP), digital light projector (DLP) or other types of projecting displays as well as any other types of displays used in digital receivers.

The user selection unit 50 generates a selection signal to select an image capture function and a play function of the captured image, and outputs various control signals according to user's manipulation. The image capture function refers to a function which captures a particular image from a moving picture such as a currently-supplied broadcast signal or captures a particular image from a moving picture such as a stored broadcast signal through a time shift function, and then generates a still image. If a user desires to capture an image of celebrities or sports scenes among broadcast images that change quickly, a user may manipulate the user selection unit 50 to capture the image and play the captured image. The user selection unit 50 may include an additional shortcut key, a touch pad or a remote controller wirelessly communicating with the broadcast processing apparatus, to select the function. The shortcut key or the touch pad may be formed in an external frame of the broadcast processing apparatus. The touch pad may include a touch panel disposed on the display unit 40. The user selection unit 50 may include general input units such as a keyboard and a mouse.

The JPEG file generator 60 generates a marker code in a JPEG format according to a control of the controller 80. The JPEG file generator 60 generates a JPEG file by using the generated marker code, the header information and the encoded I picture. The broadcast processing apparatus according to the present embodiment generates the JPEG file by using the encoded I picture among the inputted image signals, and decodes the encoded I picture through the decoder 30.

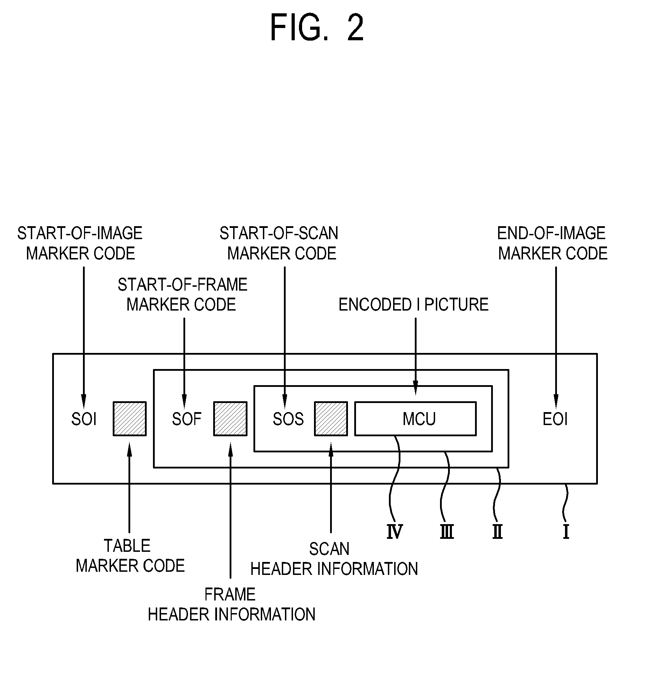

Figure 2 illustrates the marker code of the JPEG file according to the present embodiment. The JPEG file includes marker codes and code data that are consecutively connected with each other, instead of including frame by frame. As shown therein, the JPEG file is formed as four levels, i.e. from one image I, to a frame II, to a scan III to actual image data IV. The four levels are divided by a start marker code. The marker code includes a start-of-image marker code to mark the start of the image, a start-of-frame marker code to mark the start of the frame, a start-of-scan marker code to mark the start of the scan and an end-of-image marker code to mark the end of the image. The marker code is two bytes. The first code starts with 'FF' and subsequent codes are represented as 'C0 to FE'. The JPEG file generator 60 generates the marker code marking the JPEG file to change the captured image into a JPEG format. The JPEG file generator 60 generates a huffman table to decode the JPEG file and generates a table marker code to mark a quantization table. The tables may be disposed before the frame like that in the present embodiment, or disposed in other locations such as between the frame and the scan.

Frame header information is disposed behind the start-of-frame marker code. Scan header information is disposed behind the start-of-scan marker code. The frame header information includes a vertical sampling factor, a vertical sampling factor value, component identification information and a quantization table number, etc.

The scan header information includes DC/AC coefficients, i.e. selection information of the entropy coding table, and information such as an entropy coding table. The header information is extracted from the supplied broadcast signal, i.e. from the image signal.

The actual image data is named a minimum coded unit (MCU), and includes image information on the encoded I picture. As the information on the encoded I picture is used as the MCU of the JPEG file, a JPEG file decoder is not needed to decode the JPEG file. That is, the JPEG file which is generated according to the present embodiment may be decoded by the decoder 30 decoding the moving picture.

Among pictures of the moving picture according to the MPEG standard, the I picture is similar to the JPEG file in a format. Thus, the processes of decoding the I picture and the JPEG file are very similar. Thus, according to the present embodiment, the JPEG file may be decoded without an additional JPEG file decoder.

The storage unit 70 stores the generated JPEG file therein according to the control of the controller 80.

If an image capture command is supplied through the user selection unit 50 to capture the image, the controller 80 controls the JPEG file generator 60 to generate the JPEG file and store the generated JPEG file in the storage unit 70. If a play signal is supplied to play the captured image, the JPEG file stored in the storage unit 70 is decoded by the decoder 30. The JPEG file is inputted to the decoder 30 through the demultiplexer and the parser 20. Here, the controller 80 adjusts bit shift, and controls the decoder 30 to select the quantization matrix and the huffman table, to decode the JPEG file. The JPEG file is decoded by the variable length decoder, the inverse scanner, the inverse quantizer and the inverse discrete cosine transformer. However, processing of the JPEG file is not performed to compensate for the motion by the motion compensator. The decoded JPEG file is displayed on the display unit 40 as a still image.

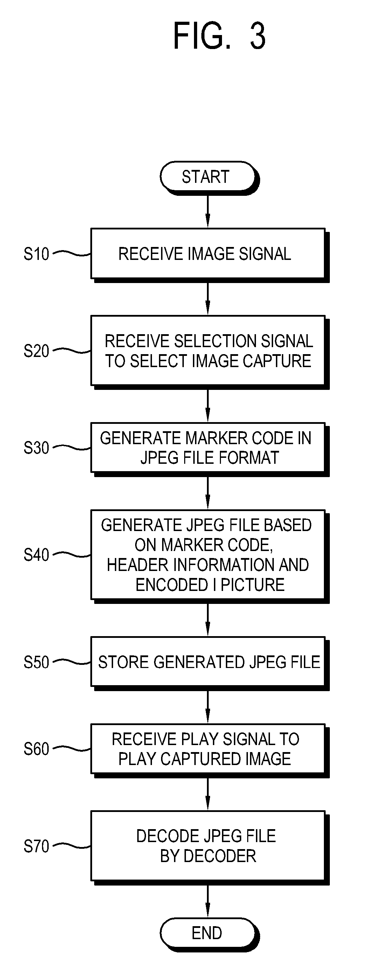

Figure 3 is a control flowchart illustrating a control method of the broadcast processing apparatus according to the present embodiment.

First, the image signal having the encoded I picture and the header information is supplied through the signal receiver 10 (S10).

The parser 20 extracts the header information from the supplied image signal, and the decoder 30 decodes the image signal, thereby displaying the image signal on the display unit 40.

If the selection signal is supplied through the user selection unit 50 to capture the image (S20), the JPEG file generator 60 generates the marker code in the JPEG format (S30). The JPEG format marker code includes start-of-image marker code, start-of-frame marker code, start-of-scan marker code and end-of-image marker code in two bytes.

Then, the JPEG file is generated based on the header information extracted by the parser 20, the encoded I picture and the generated marker code (S40). The generated JPEG file is stored in the storage unit 70 (S50).

If the play signal is supplied to play the captured image (S60), the JPEG file stored in the storage unit 70 is decoded by the decoder 30 (S70) and displayed on the display unit 40.

Alternatively, the JPEG file may be formed and played at the same time by a single selection signal, instead of being formed and played respectively by the capture command and play command from the user selection unit 50.

The broadcast processing apparatus may further include a user interface (UI) generator to generate UI information so that the UI information is displayed on the display unit 40. The broadcast processing apparatus may further include additional software to edit the JPEG file.

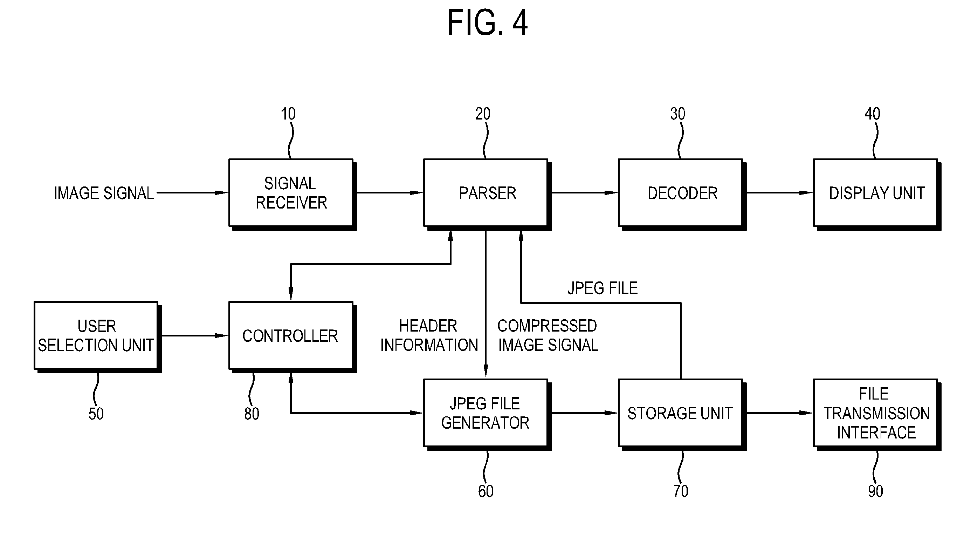

Figure 4 is a control block diagram of a broadcast processing apparatus according to a second exemplary embodiment of the present invention.

As shown therein, the broadcast processing apparatus further includes a file transmission interface 90 which transmits a JPEG file stored in a storage unit 70. The JPEG file may be transmitted to an additional storage unit, another broadcast processing apparatus or a computer system through a network. The file transmission interface 90 includes a wired/wireless LAN unit to communicate with wired/wireless networks, a wireless communication unit to provide wireless communication such as Bluetooth, a USB port, a memory card slot, etc. In this case, a user may manipulate the user selection unit 50 to generate a control signal and transmit the stored JPEG file. The broadcast processing apparatus according to the present embodiment may further include a UI generator which generates graphic user interface (GUI) information to transmit the JPEG file.

As described above, the present invention provides a broadcast processing apparatus which captures and plays a moving picture without difficulty, and a control method thereof.

Also, the present invention provides a broadcast processing apparatus which decodes a JPEG file without an additional decoder, and a control method thereof.

Although a few exemplary embodiments of the present invention have been shown and described, it will be appreciated by those skilled in the art that changes may be made in these exemplary embodiments without departing from the principles of the invention, the scope of which is defined in the appended claims.

## Claims

1. An image processing apparatus comprising:
a signal receiver for receiving a video image signal;
means for generating a marker code; and
means for generating a still image file based on the generated marker code and a frame of the video image signal.

2. An image processing apparatus according to claim 1, wherein the image signal comprises a moving picture expert group MPEG signal, the frame comprises an intra-coded I frame and the means for generating a still image file is further arranged to generate the still image file based on header information of the video image signal.

3. An image processing apparatus according to claim 2, wherein the means for generating a marker code and the means for generating an image file comprise a file generator, the apparatus further comprising:
a display unit;
a user selection unit; a parser for extracting the header information from the received image signal; and
a controller for controlling the file generator to generate the image file in response to an image capture command supplied through the user selection unit to capture the image.

4. An image processing apparatus according to claim 3, wherein the image file comprises a joint photographic expert group (JPEG) file.

5. An image processing apparatus according to claim 4, further comprising a decoder which decodes the image signal, wherein
the controller controls the decoder to decode the JPEG file if a play command is supplied through the user selection unit to play the captured image.

6. An image processing apparatus according to claim 4 or 5, further comprising a storage unit, wherein
the controller stores the generated JPEG file in the storage unit, and decodes the stored JPEG file if the play command is supplied.

7. An image processing apparatus according to any preceding claim, wherein the marker code comprises at least one of a start-of-image marker code, an end-of-image marker code, a start-of-frame marker code and a start-of-scan marker code.

8. An image processing apparatus according to claim 6, further comprising a file transmission interface which transmits the JPEG file stored in the storage unit.

9. An image processing apparatus according to claim 8, wherein the file transmission interface comprises at least one of a wired/wireless LAN unit, a Bluetooth unit, a wireless communication unit, a USB port and a memory card slot.

10. A method of processing a video image signal, the method comprising:
receiving the video image signal;
generating a marker code; and
generating a still image file based on the marker code and a frame of the video image signal.

11. A method according to claim 10, wherein the image signal comprises a moving picture expert group MPEG signal, the frame comprises an intra-coded I frame and generating a still image file further comprises generating a still image file based on header information of the video image signal.

12. A method according to claim 11, wherein the method is performed by an image processing apparatus having a parser to extract the header information from the video image signal and a decoder to decode the I frame, and wherein generating the marker code and image file are performed in response to receiving a signal indicating that a user has selected an image capture function of the image processing apparatus.

13. A method according to claim 12, wherein the image file comprises a joint photographic expert group (JPEG) file.

14. A method according to claim 13, further comprising storing the generated JPEG file.

15. A method according to claim 13 or 14, further comprising: receiving a play signal to select playing of the captured image, and
decoding the JPEG file through the decoder.

16. A method according to any one of claims 11 to 15, wherein the generating of the still image file is in accordance with a user input.

17. A method according to any one of claims 11 to 16, wherein the moving picture is encoded in the units of MCU (a minimum coded unit).

18. A method according to any one of claims 10 to 17, further comprising the step of storing the generated image file.

19. A method according to claim 18, further comprising the step of playing the stored image file upon the request from a user.

20. A method according to claim 18 or 19, further comprising the step of outputting the stored image file to an external device.

21. A method according to claim 20, wherein the outputting the stored image file occurs through a blue tooth unit.

22. A method according to any one of claims 10 to 21, wherein the video image signal is a digital television broadcast.
